Europäisches Patentamt

(19) European Patent Office

Office européen des brevets

(11) Veröffentlichungsnummer: **0 119 513**
**B1**

(12) EUROPÄISCHE PATENTSCHRIFT

(45) Veröffentlichungstag der Patentschrift:
05.08.87

(51) Int. Cl.⁴: **F 16 P 1/02**

(21) Anmeldenummer: **84101907.8**

(22) Anmeldetag: **23.02.84**

(54) **Schutzhaube für eine handgeführte Werkzeugmaschine.**

(30) Priorität: **22.03.83 DE 8308464 U**

(43) Veröffentlichungstag der Anmeldung:
**26.09.84 Patentblatt 84/39**

(45) Bekanntmachung des Hinweises auf die Patenterteilung:
**05.08.87 Patentblatt 87/32**

(84) Benannte Vertragsstaaten:
**DE FR GB IT SE**

(56) Entgegenhaltungen:
**DE - A - 2 216 990**
**DE - C - 648 334**
**DE - C - 814 352**
**FR - A - 1 156 422**
**FR - A - 2 452 354**
**GB - A - 605 567**

(73) Patentinhaber: **ROBERT BOSCH GMBH, Postfach 50,**
**D-7000 Stuttgart 1 (DE)**

(72) Erfinder: **Stäbler, Manfred, Christophstrasse 45,**
**D-7022 Echterdingen (DE)**

## Beschreibung

Die Erfindung geht aus von einer Schutzhaube für eine handgeführte Werkzeugmaschine nach der Gattung des Hauptanspruchs. Es ist schon eine solche Schutzhaube bekannt geworden aus der DE-C 2 216 990. Die dort gezeigte Schutzhaube zeigt zwei Langlöcher mit Durchsteckerweiterungen für die Köpfe von Halteschrauben. Mittels dieser Halteschrauben, die zwei Führungsschlitze in einem Führungsschlitten durchgreifen, kann der Führungsschlitten mit der Schutzhaube verbunden werden. Der Abstand der Führungsschlitze und der Abstand der Durchsteckerweiterungen der Langlöcher voneinander sind verschieden gross gehalten. Teile der Führungsschlitze und die Durchsteckerweiterungen sind nur durch Drehen der Schutzhaube gegenüber dem Führungsschlitten in der Berührungsebene zwischen der Schutzhaube und dem Führungsschlitten zur Deckung zu bringen. In jeder anderen, vor allem der normalen Gebrauchsstellung, können die durch die Führungsschlitze und die Langlöcher gesteckten Schrauben nicht an die Durchsteckerweiterungen herangebracht werden. Die Halteschrauben, die durch die Langlöcher in der Schutzhaube und die Führungsschlitze im Führungsschlitten hindurchgreifen und zusammen mit aufgeschraubten Flügelmuttern den Führungsschlitten und die Schutzhaube zusammenhalten, können nach leichtem Lösen der Flügelmuttern ein Verschieben des Führungsschlitten gegenüber der Schutzhaube zulassen. Dabei wird durch die beschriebenen unterschiedlichen Abstände ein ungewolltes Lösen der Schutzhaube von dem Führungsschlitten durch gleichzeitiges Austreten der Köpfe der Halteschraube aus den Durchsteckerweiterungen in der Schutzhaube, mit relativ grosser Sicherheit vermieden. Es gibt nur eine ganz bestimmte Relativlage zwischen der Schutzhaube und dem Führungsschlitten, in der die Köpfe der beiden Halteschrauben durch die Durchsteckerweiterungen in der Schutzhaube hindurchgeführt werden können. Nachteilig ist hierbei die umständliche Montage. Zunächst muss der Kopf einer Halteschraube durch die eine Durchsteckerweiterung hindurchgesteckt werden. Dann muss die Halteschraube bis an das andere Ende des Langlochs verschoben werden. Danach muss der Führungsschlitten um diese Halteschraube geschwenkt werden, bis die andere Halteschraube einen solchen Abstand von der ersten Halteschraube hat, dass deren Kopf durch seine ihm zugeordnete Durchsteckerweiterung hindurchgesteckt werden kann. Danach ist der Führungsschlitten wieder in seine Arbeitsstellung zu schwenken, in welcher die Längsschlitze des Führungsschlittens im wesentlichen rechtwinklig zur Öffnungskante der Schutzhaube ausgerichtet sind. Dabei bewegt sich die zweite Halteschraube in das zweite Langloch hinein.

Bei einer anderen durch das DE-GM 7 909 078 bekannt gewordenen Schutzhaube solcher Art sind Durchsteckerweiterungen für die Köpfe der Halteschrauben in der Schutzhaube vorgesehen, die der Seitenansicht des Schaftendes der Halteschrauben mit dem Schraubenkopf in der Form angepasst sind. Die Halteschrauben können so nur gegenüber ihrer normalen Lage um etwa 90° geschwenkt durch die Durchsteckerweiterungen hindurchgebracht werden. Hierzu ist eine Schwenkbewegung der Schrauben nötig. Auch hier ist sichergestellt, dass sich die Schutzhaube und der Führungsschlitten beim Gegeneinanderverstellen nicht ungewollt lösen können. Auch hier ist die verhältnismässig aufwendige Montage nachteilig.

Beide genannten Konstruktionen besitzen Eigenarten, die eine genaue Montageanleitung erfordern. Ein nicht Eingeweihter kann nicht ohne weiteres erkennen, wie er den Führungsschlitten und die Schutzhaube mittels der Halteschrauben zusammenfügen kann.

Vorteile der Erfindung

Die erfindungsgemässe Schutzhaube mit den kennzeichnenden Merkmalen des Hauptanspruchs hat demgegenüber den Vorteil, dass auch der Nichteingeweihte beim Betrachten der Einzelteile – Schutzhaube, Führungsschlitten, Halteschrauben usw. – schnell erkennen kann, wie diese Teile zusammenzufügen sind. Dabei sichert die mindestens eine mit dem Kopf einer Halteschraube zusammenwirkende Sperrnase ebenso zuverlässig gegen unbeabsichtigtes Lösen der Schutzhaube vom Führungsschlitten.

Durch die in den Unteransprüchen aufgeführten Massnahmen sind vorteilhafte Weiterbildungen und Verbesserungen der im Hauptanspruch angegebenen Schutzhaube möglich. Besonders vorteilhaft ist das Anordnen einer axial wirkenden Druckfeder auf dem Schaft der Halteschraube, deren Kopf zum Zusammenwirken mit mindestens einer Sperrnase bestimmt ist.

Zeichnung

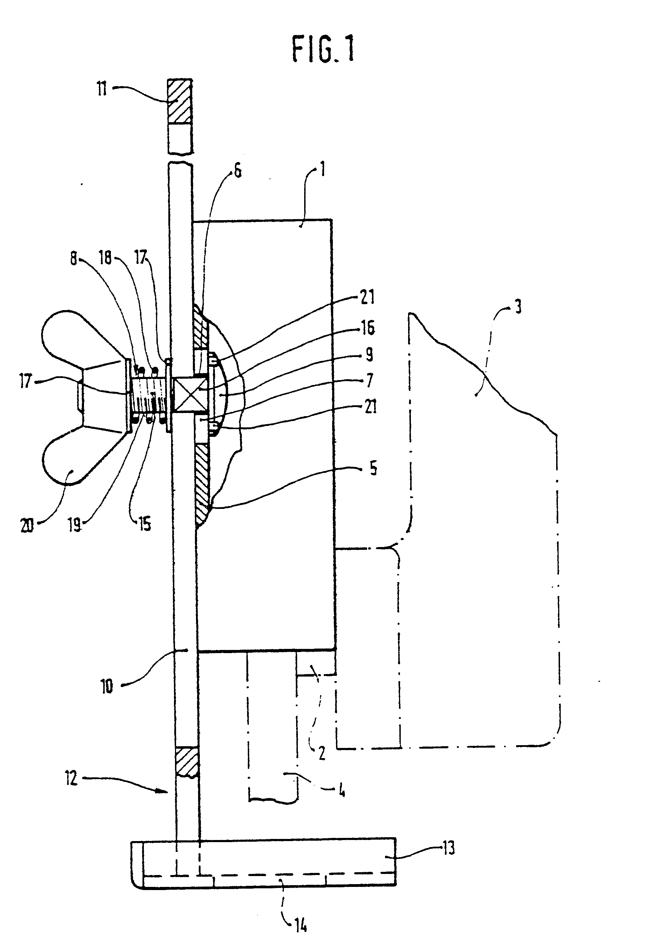

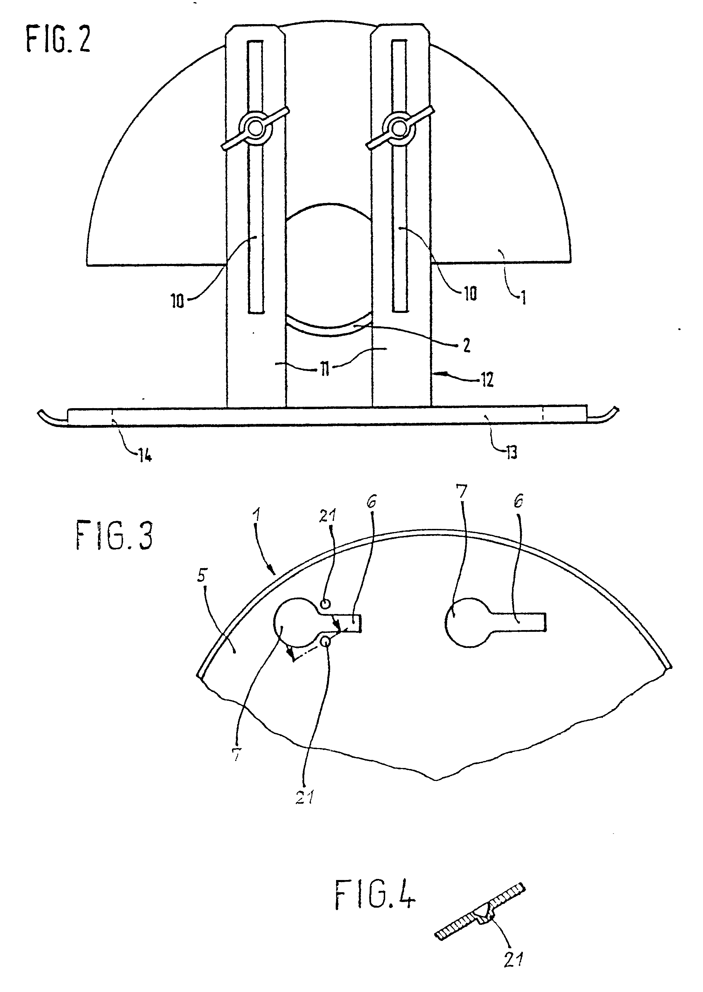

Ein Ausführungsbeispiel des Erfindungsgegenstandes ist in der Zeichnung dargestellt und in der nachfolgenden Beschreibung näher erläutert. Es zeigen Figur 1 eine Seitenansicht einer mit einem Führungsschlitten zusammengefügten Schutzhaube, teilweise geschnitten, Figur 2 eine Seitenansicht zu Figur 1, Figur 3 eine teilweise Seitenansicht der vom Führungsschlitten getrennten Schutzhaube und Figur 4 einen Teilschnitt zu Figur 3.

Eine Schutzhaube 1 ist mit einer Halterung 2 für einen Winkelschleifer 3 versehen. Mit dem Winkelschleifer 3 ist eine Schleifscheibe 4 verbunden. Die vom Winkelschleifer 3 abgewandte Wand 5 der Schutzhaube 1 besitzt längliche Durchbrüche 6 mit Durchbruchserweiterungen 7. Die Durchbruchserweiterungen 7 sind so gross gewählt und so geformt, dass Halteschrauben 8 mit ihren Köpfen 9 senkrecht hindurchgesteckt werden können. Der Mittenabstand der Durchbruchserweiterungen 7 voneinander entspricht dem Abstand zwischen zwei parallel verlaufenden Längsschlitzen 10 in zwei stabförmigen Haltern 11 eines Führungsschlittens 12. Die Halter 11 tragen eine parallel zur Drehachse der Schleifscheibe 4 angeordnete Auflage 13 des Führungsschlittens 12. Diese Auflage 13 hat einen Durchtrittsschlitz 14 für die Schleifscheibe 4. Die Halteschrauben 8 besitzen an ihrem Schaft 15 einen vierkantigen Ansatz 16, dessen Schlüsselweite so bemessen ist, dass er in den Durchbrüchen 6 gleiten kann. Ausserdem durchgreift der Schaft 15 der Halteschrauben 8 den ihnen jeweils zugeordneten Längsschlitz 10. Zwei Unterlegscheiben 17 und eine Druckfeder 18 sind auf den Schaft 15 der Halteschrauben 8 aufgeschoben, bevor auf dessen Gewinde 19 eine Flügelmutter 20 aufgeschraubt worden ist. Einer der Durchbruchserweiterungen 7 sind zwei Sperrnasen 21 vorgeordnet, über die der Kopf 9 der zugehörigen Halteschraube 8 gehoben werden muss, wenn die Schäfte 15 der Halteschrauben 8 in den Durchbrüchen 6 von den Durchbruchserweiterungen 7 weg verschoben werden sollen. Sobald der Kopf hinter den Sperrnasen 21 an die Oberfläche der Wand 5 angelegt ist, können die Halteschrauben 8 nur noch vom den Durchbruchserweiterung abgewendeten Ende der Durchbrüche 6 bis zum Anschlagen des Kopfes 9 der einen Halteschraube 8 an den Sperrnasen 21 verschoben werden. Wenn der Bedienende keinen axialen Druck über die Flügelmuttern 20 auf die Halteschrauben 8 ausübt, sorgt die Druckfeder 18 dafür, dass der Kopf 9 stets an der Wand 5 anliegt. Die Sperrnasen 21 sorgen dann für die gewünschte Sicherung.

Für den bestimmungsgemässen Gebrauch der Schutzhaube 1 mit dem an ihr befestigten Führungsschlitten 12 ist es aber auch ausreichend, wenn Halteschrauben 8 ohne Druckfedern 18 montiert sind. Die Flügelmuttern 20 können so weit auf die Halteschrauben 8 aufgeschraubt werden, dass sie die Schutzhaube 1 und den Führungsschlitten 12 aneinander festklemmen. Zum Verstellen des Abstandes der Auflage 13 von der Schutzhaube 1 werden dann die Flügelmuttern 20 nur so weit gelöst, dass ihre Klemmwirkung aufgehoben ist. Das dabei entstehende Axialspiel der Halteschrauben 8 reicht nicht aus, um dem Kopf 9 über die Sperrnase 21 heben zu können, der mit diesen Sperrnasen zusammen die Verbindung zwischen der Schutzhaube 1 und dem Führungsschlitten 12 sichert.

Um Schwenkbewegungen der Schutzhaube 1 gegenüber dem Führungsschlitten 12 zu ermöglichen, ist einer der Durchbrüche 6 verlängert.

**Patentansprüche**

1. Schutzhaube (1) für eine handgeführte Werkzeugmaschine (3) mit einem umlaufenden Werkzeug wie Schleifscheibe (4), Kreissäge oder dgl., mit Durchbrüchen (6) und daran anschliessenden Durchbruchserweiterungen (7), in Form der Draufsicht von Schraubenköpfen (9), durch die zur Befestigung vorzugsweise eines Führungsschlittens (12) dienende, mit ihren Köpfen (9) die Schutzhaube (1) hintergreifende Halteschrauben (8) von aussen hindurchgeführt werden können, dadurch gekennzeichnet, dass die Durchbruchserweiterungen (7) am gleichen Ende der länglichen Durchbrüche (6) in der Schutzhaube (1) angebracht sind, und dass neben mindestens einer Durchbruchserweiterung (7) im Wege des ihr zugeordneten, an der Oberfläche der Wand (5) der Schutzhaube (1) entlang gleitenden Kopfes (9) der in ihrem Durchbruch (6) gleitenden Halteschraube (8) eine Sperrnase (21) angeordnet ist, die aus der Wand (5) der Schutzhaube (1) herausragt.

2. Schutzhaube nach Anspruch 1, dadurch gekennzeichnet, dass auf dem Schaft (15) der Halteschraube (8) zwischen der Schutzhaube (1) und einer auf die Halteschraube (8) aufgeschraubten Flügelmutter (20) eine vorzugsweise als Schraubenfeder ausgebildete, axial wirkende Druckfeder (18) angeordnet ist.

3. Schutzhaube nach Anspruch 2, dadurch gekennzeichnet, dass beiderseits der Druckfeder (18) Unterlegscheiben (17) auf den Schaft (18) der Halteschraube (8) aufgeschoben sind.

4. Schutzhaube nach Anspruch 1, dadurch gekennzeichnet, dass der Mittenabstand der Durchbruchserweiterungen (7) voneinander dem Mittenabstand von Längsschlitzen (10) in Haltern (11) des Führungsschlittens (12) entspricht.

5. Schutzhaube nach Anspruch 1, dadurch gekennzeichnet, dass einer der Durchbrüche (6) verlängert ist, so dass auch eine Schwenkbewegung der Schutzhaube (1) gegenüber dem Führungsschlitten (12) möglich ist.

**Claims**

1. Protective hood (1) for a hand-operated machine tool (3) having a rotating tool, such as a grinding wheel (4), circular saw or the like, with perforations (6) and widened perforation portions (7) adjacent to these and in the form, as seen in a plan view, of screw heads (9), through which holding screws (8) preferably serving for fastening a guide slide (12) and engaging behind the protective hood (1) with their heads (9) can be guided from outside, characterized in that the widened perforation portions (7) are formed at the same end of the elongate perforations (6) in the protective hood (1), and in that, next to at least one widened perforation portion (7), a stop lug (21) projecting from the wall (5) of the protective hood (1) is arranged in the path of the head (9) sliding along the surface of the wall (5) of the protective hood (1) and belonging to the holding screw (8) sliding in its perforation (6).

2. Protective hood according to Claim 1, characterized in that a compression spring (18) preferably designed as a helical spring and exerting an axial effect is arranged on the shank (15) of the holding scew (8) between the protective hod (1) and a wing nut (20) screwed onto the holding screw (8).

3. Protective hood according to Claim 2, characterized in that washers (17) are pushed onto the shank (18) of the holding screw (8) on both sides of the compression spring (18).

4. Protective hood according to Claim 1, characterized in that the distance between the centres of the widened perforation portions (7) corresponds to the distance between the centres of longitudinal slots (10) in holders (11) of the guide slide (12).

5. Protective hood according to Claim 1, characterized in that one of the perforations (6) is extended, so that it is also possible for the protective hood (1) to execute a pivoting movement relative to the guide slide (12).

**Revendications**

1. Capot de protection (1) pour machine-outil à main (3) pourvue d'un outil rotatif tel que meule (4), scie circulaire ou autre du même genre, ce capot de protection comportant des percements (6) avec élargissements (7) leur faisant suite, en forme de la vue de-dessus de têtes de vis (9), et à travers lesquels on peut faire passer de l'extérieur des vis de retenue (8) prenant prise par derrière, par leurs têtes (9), sur le capot de protection (1) ser servant à la fixation de préférence d'un coulisseau de guidage (12), capot de protection caractérisé en ce que les élargissements (7) des percements sont prévus à la même extrémité des percements oblongs (6) ménagés dans le capot de protection (1), et en ce que, à côté d'au moins un élargissement (7) d'un percement, sur le chemin de la tête (9), associée à celui-ci, de la vis de retenue (8) coulissant dans son percement (6), tête de vis qui glisse le long de la surface de la paroi (5) du capot de protection (1), est monté un taquet d'arrêt (21), qui fait saillie de la paroi (5) du capot de protection (1).

2. Capot de protection selon la revendication 1, caractérisé en ce que sur la tige (15) de la vis de retenue (8), entre le capot de protection (1) et un écrou à oreilles (20) vissé sur la vis de retenue (8), est monté un ressort de pression (18), agissant en direction axiale, constitué de préférence sous la forme de ressort hélicoïdal.

3. Capot de protection selon la revendication 2, caractérisé en ce que, des deux côtés du ressort de pression (18), des rondelles de calage (17) sont enfilées sur la tige (15) de la vis de retenue (8).

4. Capot de protection selon la revendication 1, caractérisé en ce que la distance de centre à centre, l'un de l'autre, des élargissements (7) des percements correspond à l'écartement entr'axe de fentes longitudinales (10) ménagées dans des montants d'appui (11) du coulisseau de guidage (12).

5. Capot de protection selon la revendications 1, caractérisé en ce que l'un des percements (6) est prolongé, de manière à rendre possible aussi un mouvement de pivotement du capot de protection (1) par rapport au coulisseau de guidage (12).

0 119 513

# FIG.1

FIG.2

10    10    1

2

11    12

14    13

FIG.3

1    21    6    7    6

5

7

21

7

FIG.4

21